# EUROPEAN PATENT SPECIFICATION

(11) **EP 1 372 075 B1**
(45) Date of publication and mention of the grant of the patent: **25.08.2004**
(21) Application number: 02013454.0
(22) Date of filing: 13.06.2002
(51) Int. Cl.: G06F 11/00

(54) **Method for eliminating a computer from a cluster**
Verfahren um einen Computer aus einem Cluster zu entfernen
Procédé pour éliminer un ordinateur d'une grappe d'ordinateurs

(43) Date of publication of application: 17.12.2003
(73) Proprietor: Fujitsu Siemens Computers, LLC, Milpitas, CA 95035 (US)
(72) Inventor: Armstrong, Joseph W., Santa Cruz, CA 95062 (US)
(74) Representative: Epping Hermann & Fischer

(56) References cited:
- EP-A- 0 683 456
- EP-A- 1 117 039
- DE-A- 19 837 008
- "Release Notice: Reliant Monitor Software RMS V3.1E30" SIEMENS, [Online] May 2001 (2001-05), XP002231373 Retrieved from the Internet: <URL:http://www.its.siemens.de/lobs/its/it s_sc/fgm_en/linux/rms31e_en.htm> [retrieved on 2003-02-13]

## Description

The invention relates to a method for eliminating a computer from a cluster of two or more computers in order to guarantee data integrity and application recovery on another computer.

The method described below is disclosed in the German Patent DE 198 37 008 C2. A cluster normally consists of a cluster host and cluster nodes. The cluster nodes are administrated by a software called cluster foundation which is installed on the cluster host. The cluster foundation provides the basic central services. These services include, for example, sign-of-life monitoring between cluster nodes. In addition to these services, services such as fail-over manager for high availability and services for parallel data bases can be added depending on the application area. Services for dynamic load balancing opens the way to internet application areas such as e-commerce and application hosting. The basis for almost all high availability solutions is a powerful and flexible fail-over manager in the background. In the case of the prime cluster from the applicant the fail-over manager is called reliant monitor software (RMS). RMS is a generic monitor observation of nodes in a cluster and for the fail-over control of the applications.

For sign-of-life monitoring between the cluster nodes it must be detected, whether there is a real breakdown of one of the cluster nodes or whether there is a problem in the communication between the clustered nodes. If there is a problem in the communication between the cluster nodes it must be located and it must be decided which of the computers has to be shut down.

The RMS as the fail-over manager has access to all computers in the cluster and to all connections between the computers in the cluster. The Single Console (SCON) has the ability to stop or shut down every computer in the cluster or to reboot them. All RMS instances in the cluster send a message to the SCON if a sign-of-life message of another computer in the cluster is missing. With a missing sign-of-life message of one computer in the cluster the data integrity could not be guaranteed which means that this computer must be eliminated from the cluster. Therefore, the message from RMS to the SCON is called a shutdown request or a kill request. If there are n computers connected to a cluster and one node or computer sends no sign-of-life message the SCON receives n - 1 shutdown requests. In this existing system the SCON collects and evaluates the shutdown requests and eliminates the defect machine or computer from the cluster.

The problem is that with the existing technology the SCON is a single point of failure for node elimination processing, no redundant shut down methods are supported, no interaction with the cluster foundation is supported, the existence of a fail-over manager is required and the SCON introduces extra cost to a customer as they are required to purchase an addition machine on which to run the SCON software.

EP1117039A discloses a cluster shutdown controller which is part of an integrity protector software package installed on each node in a cluster. Said shutdown controller initiates a shutdown of every node in a given subcluster when necessary (e.g. in case of a "split brain" problem).

Therefore it is the object of the invention to provide a node elimination facility that will be available in clusters with or without a fail-over manager and with or without cluster-foundation. The node elimination facility will be run on every node in the cluster so that it does not represent a single point of failure for node elimination processing. The facility will also support redundant node elimination methods in order to increase the probability of successful node elimination. Finally, the facility will not require the purchase of an additional machine on which to run its software thereby reducing the costs of the cluster to the customer.

This object is achieved according to the invention, which is defined by the claims, with a number of independent shutdown agents registered with a shutdown facility which is installed on every computer in the cluster.

The shutdown facility provides a general framework for invoking redundant, independent shutdown methods for this purpose. The shutdown methods are implemented by the shutdown agents. When a shutdown request is being processed the shutdown facility has the possibility to iterate through the list of registered shutdown agents if needed and can therefore provide a higher probability of a successful host elimination.

The shutdown facility and the shutdown agents are also installed on the cluster host with the fail-over manager if one exists.

The shutdown facility tracks the status of each shutdown agent so that an operator may be advised if a shutdown agent becomes unavailable.

The invention provides a list of shutdown agents in a configuration file which defines an ordered list of the shutdown agents such that the first shutdown agent in the list is a preferred shutdown agent which is issued first with the shutdown request and if its response indicates a failure to shutdown the next shutdown agent is issued until either a shutdown agent responds with a successful shutdown or all shutdown agents have been tried.

An exemplary embodiment of the invention is explained in more detail below with reference to a drawing.

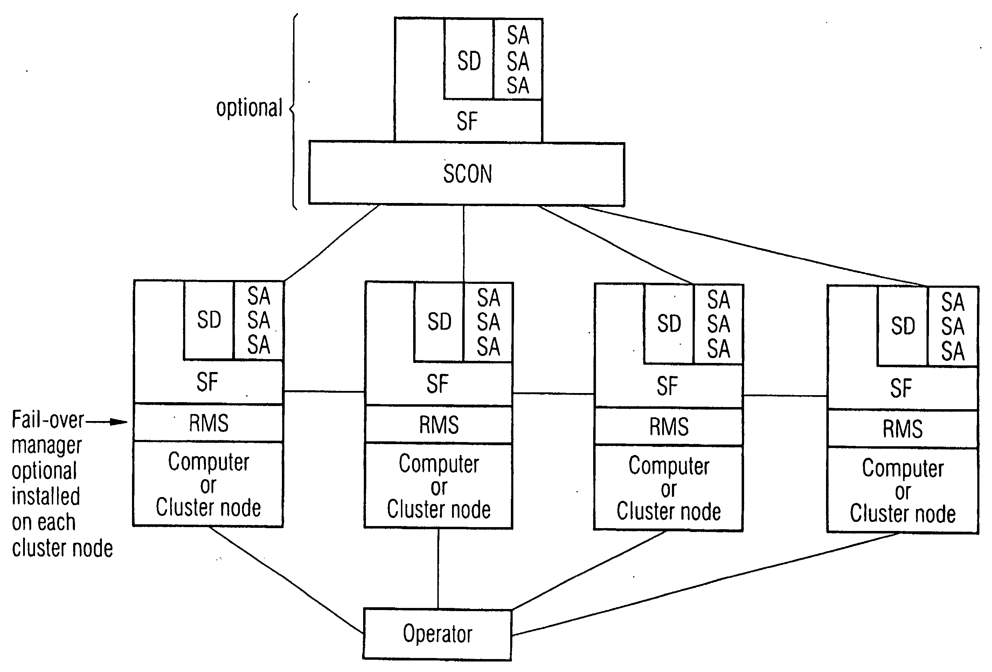

The Figure shows schematically a cluster of four computers or servers (called cluster nodes) which are administrated by a fail-over manager which could for example be the existing RMS fail-over manager. The fail-over manager is optional and not necessary for the invention.

Each computer gives a sign-of-life message to the fail-over manager and to all other computers in the cluster. In the case that a sign-of-life message is missing the computer with the missing sign-of-life message has to be eliminated. For this purpose a shutdown facility SF is installed on every computer. The shutdown facility comprises a shutdown daemon SD and several shutdown agents SA. Each shutdown agent is a program in which a shutdown method is implemented.

The shutdown agents of the shutdown facility are independent commands that may be called by the shutdown daemons or by the SCON.

The shutdown daemon is triggered by either a command line request to shut down a cluster machine from the operator or an event called ENS from the cluster foundation.

The shutdown request is fulfilled by calling one or more shutdown agents defined in the shutdown daemon configuration file. After the shutdown has been verified the shutdown daemon will transfer the node state to node-down if a fail-over manager or a cluster foundation CF is installed and running.

When a fail-over manager or a cluster foundation is not installed and running the shutdown daemon will only respond to the command line request of the operator.

When the cluster foundation is installed and configured on the cluster host the shutdown daemon registers with ENS to receive:
- NODE_AVAILABLE
- LEAVINGCLUSTER
- LEFTCLUSTER
- NODE_DOWN

These events are the existing events generated by the cluster foundation.

The shut down daemon tracks the state of the cluster nodes so that it can be determined when a computer needs to be eliminated.

The shutdown daemon has a configuration file which defines an ordered list of shutdown agents such that the first shutdown agent in the list is a preferred shutdown agent. This preferred shutdown agent is issued a shutdown request and if its response indicates a failure to shutdown the second shutdown agent is issued the shutdown request. This request/response is repeated until either a shutdown agent responds with a successful shutdown or all shutdown agents have been tried. If no shutdown agent is able to successfully shutdown a cluster node then operator intervention is required and the node is left in the left cluster state.

Whatever configuration information is needed by the shutdown agent must be defined by the shutdown agent writer and configured in an independent configuration file. The shutdown agents are designed to be independent processes. The required operating environment of a shutdown agent is that
a. installation requirements must be adhered to,
b. the required command line options must be supported and
c. the required runtime action must be performed.

If a new shutdown agent is developed the shutdown daemon and the "SCON", if one exists, do not need to be requalified, only the new shutdown agent needs to be qualified.

The advantages of the shutdown facility SF over the existing RMS/SCON systems are:
a. Ability to shutdown a cluster node with or without running a fail-over manager (RMS).
b. Ability to shutdown a cluster node with or without running SCON.
c. Ability to shutdown a cluster node from any cluster service layer product.
d. The existing fail-over manager (RMS and SCON) system is optional on all clusters regardless of number of nodes and platform mixture.
e. Redundant shutdown methods will be available on clusters with SCON because the SCON will use its existing method as well as those methods implemented in the shut down agents.
f. Redundant shutdown methods will be available on clusters without SCON because several shutdown agents are available and each shutdown agent implements a shutdown method.
g. Faster qualification cycles when introducing a new shutdown agent because the shutdown daemon and the fail-over manager (RMS/SCON), if one exists, do not need to be requalified.
h. Active monitoring of configured shutdown agents so that an operator can be notified of a failure prior to that agent being needed to be used.

## Claims

1. Method for eliminating a computer from a cluster with two or more computers in order to guarantee data integrity and application recovery on another computer, wherein a shutdown facility is installed on all computers in the cluster, **characterised in that** a plurality of independent shutdown agents are registered with the shutdown facility and that the shutdown agents are installed on all computers in the cluster.

2. The method of claim 1 wherein the shutdown facility and the shutdown agents are also installed on a Single Console (SCON) if one exists.

3. The method of claim 1 or 2, wherein the shutdown facility comprises a shutdown daemon.

4. The method of claim 3, wherein the shutdown agents are independent commands that may be called by the shutdown daemon or SCON if one exists.

5. The method of one of the claims 3 or 4 wherein the shutdown daemon is triggered by a command line request or an event of cluster foundation if one exists.

6. The method of one of the claims 3 to 5 wherein a shutdown request is fulfilled by calling one or more shutdown agents defined in a configuration file of the shutdown daemon.

7. The method of claim 6 wherein the configuration file defines an ordered list of shutdown agents such that the first shutdown agent in the list is a preferred shutdown agent which is issued first when a shutdown request is being processed and if its response indicates a failure to shutdown, the next shutdown agent is issued until either a shutdown agent responds with a successful shutdown or all shutdown agents have been tried.

8. The method of claim 3 wherein the shutdown daemon tracks the status of each shutdown agent so that an operator may be advised if a shutdown agent becomes unavailable.

## Patentansprüche

1. Verfahren zum Eliminieren eines Computers aus einem Cluster mit zwei oder mehr Computern, um Datenintegrität und Anwendungswiederherstellung auf einem anderen Computer zu garantieren, wobei auf allen Computern in dem Cluster eine Herunterfahreinrichtung installiert ist,
**dadurch gekennzeichnet, daß**
eine Vielzahl unabhängiger Herunterfahragenten bei der Herunterfahreinrichtung registriert sind und daß die Herunterfahragenten auf allen Computern in dem Cluster installiert sind.

2. Verfahren nach Anspruch 1, wobei die Herunterfahreinrichtung und die Herunterfahragenten auch auf einer Single Console (SCON) installiert sind, wenn eine existiert.

3. Verfahren nach Anspruch 1 oder 2, wobei die Herunterfahreinrichtung einen Herunterfahr-Daemon umfaßt.

4. Verfahren nach Anspruch 3, wobei die Herunterfahragenten unabhängige Befehle sind, die durch den Herunterfahr-Daemon oder SCON, falls ein solcher bzw. eine solche existiert, aufgerufen werden können.

5. Verfahren nach einem der Ansprüche 3 oder 4, wobei der Herunterfahr-Daemon durch eine Befehlszeilenanforderung oder ein Ereignis der Cluster Foundation, falls eine existiert, ausgelöst wird.

6. Verfahren nach einem der Ansprüche 3 bis 5, wobei eine Herunterfahranforderung durch Aufrufen eines oder mehrerer in einer Konfigurationsdatei des Herunterfahr-Daemon definierter Herunterfahragenten erfüllt wird.

7. Verfahren nach Anspruch 6, wobei die Konfigurationsdatei eine geordnete Liste von Herunterfahragenten definiert, dergestalt, daß der erste Herunterfahragent in der Liste ein bevorzugter Herunterfahragent ist, der zuerst ausgegeben wird, wenn eine Herunterfahranforderung verarbeitet wird, und wenn seine Antwort ein erfolgloses Herunterfahren anzeigt, der nächste Herunterfahragent ausgegeben wird, bis entweder ein Herunterfahragent mit einem erfolgreichen Herunterfahren antwortet oder alle Herunterfahragenten ersucht wurden.

8. Verfahren nach Anspruch 3, wobei der Herunterfahr-Daemon den Status jedes Herunterfahragenten verfolgt, so daß ein Bediener benachrichtigt werden kann, wenn ein Herunterfahragent unverfügbar wird.

## Revendications

1. Procédé pour éliminer un ordinateur d'une grappe ayant deux ordinateurs ou plus, afin de garantir l'intégrité des données et la reprise du logiciel d'application sur un autre ordinateur, dans lequel une fonctionnalité d'arrêt est installée sur tous les ordinateurs de la grappe, **caractérisé en ce qu'**une pluralité d'agents d'arrêt indépendants est enregistrée dans la fonctionnalité d'arrêt et **en ce que** la pluralité d'agents d'arrêt est installée sur tous les ordinateurs de la grappe.

2. Procédé suivant la revendication 1, dans lequel la fonctionnalité d'arrêt et les agents d'arrêt sont également installés sur une console unique (SCON) s'il en existe une.

3. Procédé suivant la revendication 1 ou 2, dans lequel la fonctionnalité d'arrêt comprend un démon d'arrêt.

4. Procédé suivant la revendication 3, dans lequel les agents d'arrêt sont des commandes indépendantes qui peuvent être appelées par le démon d'arrêt ou la SCON si elle existe.

5. Procédé suivant la revendication 3 ou 4, dans lequel le démon d'arrêt est déclenché par une demande de ligne de commande ou un événement de fondation de grappe, s'il en existe.

6. Procédé suivant l'une quelconque des revendications 3 à 5, dans lequel une demande d'arrêt est exécutée par appel d'un ou de plusieurs agents d'arrêt défini(s) dans un fichier de configuration du démon d'arrêt.

7. Procédé suivant la revendication 6, dans lequel le fichier de configuration définit une liste ordonnée d'agents d'arrêt, telle que le premier agent d'arrêt de la liste est un agent d'arrêt préféré qui est contacté le premier lorsqu'une demande d'arrêt est en cours de traitement et si sa réponse indique un échec d'arrêt, l'agent d'arrêt suivant est contacté, jusqu'à ce qu'un agent d'arrêt réponde par un arrêt réussi ou que tous les agents d'arrêt aient été essayés.

8. Procédé suivant la revendication 3, dans lequel le démon d'arrêt effectue le suivi de l'état de chaque agent d'arrêt, de sorte qu'un opérateur peut être averti si un agent d'arrêt devient indisponible.
